# EUROPEAN PATENT APPLICATION

(11) **EP 1 306 474 A1**
(43) Date of publication of application: **02.05.2003**
(21) Application number: 01124367.2
(22) Date of filing: 23.10.2001
(51) Int. Cl.: D03D 1/00, D03C 19/00, B60N 2/58

(54) **Flat woven light-weight fabrics and their use for the production of seat covers**

(71) Applicant: Viktor Achter GmbH & Co KG, 41751 Viersen (DE)
(72) Inventor: Hoersch, Werner, 41751 Viersen-Boisheim (DE)
(74) Representative: HOFFMANN - EITLE

(57) **Abstract**

The invention relates to a method of constructing a flat woven light-weight fabric and the use of this fabric for the production of a seat cover.

The method comprises the steps of selecting a flat woven heavy-weight fabric having a weight of 260 to 340 g/m², said heavy-weight fabric showing a decorative pattern; determining the warp and weft yarn titer, the warp and weft density of said heavy-weight fabric; modelling different weave designs by systematically decreasing the warp yarn titer, the weft yarn titer, the warp density and/or the weft density in the weave design program; comparing each of the obtained weave designs with the pattern of the heavy-weight fabric and selecting that weave design which shows the same decorative pattern as the heavy-weight fabric and which has a weight being at least 20% lower than that of the heavy-weight fabric; and weaving a fabric accordingly.

## Description

### Background art

The invention relates to a method for constructing a flat woven light-weight fabric, to the use of this fabric for the production of a textile product such as a seat cover, and to textile products such as a seat cover and a method for their production.

Textiles designed for automotive interior applications, especially seating, must meet minimum engineering performance criteria as specified by the vehicle manufacturer. In the case of seating upholstery fabrics, these criteria are generally established so that the textile used on the seating surface (or A-surface) withstands high levels of wear and is exceedingly durable relative to tears or punctures.

For aesthetical reasons, it is generally desired that the flat woven textiles used in vehicle interiors possess a decorative pattern or surface texture. On the other hand, it is desired by most car manufacturers that the seating surface has the same design as the seat side facing and backs and possibly the textiles used on the doors (the so-called B-surface). In the past, these two aesthetical requirements could only be simultaneously met by using the same material for both the A-surface and the B-surface. However, this entails the drawback that a heavy-weight flat woven fabric is used for the B-surface, although this is not required in view of the lower wear on this surface. This is economically disadvantageous.

Therefore the object underlying the present invention is to make the production of textile products such as seat covers for automotives seats more economical without compromising fabric appearance.

### Summary of the invention

The above-mentioned object underlying the present invention is solved by the provision of a method of constructing a flat woven light-weight fabric, comprising the following steps:
i) selecting a flat woven heavy-weight fabric having a weight of 260 to 340 g/m², said heavy-weight fabric showing a decorative pattern;
ii) determining the warp yarn titer, the weft yarn titer, the warp density and the weft density of said heavy-weight fabric and entering these parameters in a weave design program;
iii) modelling different weave designs by systematically decreasing at least one parameter selected from the warp yarn titer, the weft yarn titer, the warp density and the weft density of said heavy-weight fabric in the weave design program;
iv) comparing each of the weave designs obtained in step iii) with the decorative pattern of the heavy-weight fabric and selecting that weave design which shows the same decorative pattern as that of the heavy-weight fabric and which has a weight being at least 20% lower than that of the heavy-weight fabric; and
v) weaving a fabric according to the weave design selected in step iv) thereby obtaining a light-weight fabric having the same decorative pattern as the heavy-weight fabric.

Moreover, the invention provides a flat woven light-weight fabric obtainable by this method and its use for the production of a flat woven fabric having areas which are subject to different wear during use in combination with a flat woven heavy fabric having a weight of 260 to 340 g/m², said heavy-weight fabric and said light-weight fabric showing the same decorative pattern. Moreover, the invention provides a method of producing a textile product comprising the step of connecting said flat woven light-weight fabric with said flat woven heavy-weight fabric, and a textile product obtainable by this method.

### Figures

Figure 1 shows a schematical illustration of an automotive seat cover having an A-fabric surface, a B-fabric surface and an insert.

Figure 2 shows a printout from the weave design program Design Scope of a simulation of the heavy-weight fabric used in the example.

Figure 3 shows a printout from the weave design program Design Scope of a simulation of the light-weight fabric produced in the example.

### Detailed Description

In the first step of the method of the present invention, a heavy-weight flat woven fabric is selected. It was found that in flat woven textiles used for seat covers, there is a high level of correlation between the weight per unit area of the textile and the durability of the product. Hence, to be sufficiently wear resistant, according to the present invention, a heavy-weight fabric has a weight of 260 to 340 g/m². Within this range, the heavy-weight fabric fulfils the seat cover wear tests of most car manufacturers.

Moreover, the heavy-weight fabric shows a decorative pattern. According to the present invention, a decorative pattern is a pattern or surface structure which is preferably visible at a distance of 30 cm from the eye of the observer. This pattern or surface texture can result from the use of differently coloured yarns, yarns of different visual appearance (texture, lustre, size), or woven construction. In other words, a fabric having a decorative pattern does not appear uniform to the observer at a distance of 30 cm.

According to the present invention, those heavy-weight fabrics are preferred whose warp yarns and weft yarns are differently coloured and/or have different textures.

The weave of the heavy-weight fabric is not limited and includes a plane weave and its modifications such as weft-rip weave and hopsack (panama) weave, twill weave, and satin weave such as 5-End and 7-End. Designs provided by jacquard looms are also included. Twill weaves are preferred according to the present invention. Twill weaves are characterized by rips that run diagonally across the fabric. Both Z- and S-rip twills are included.

Once a specific heavy-weight fabric is selected, its warp yarn titer, colour and texture, weft yarn titer, colour and texture, warp density, and weft density are determined. This can be done by measuring these parameters. However, in most cases these parameters are known and indicated for each fabric, obviating the need for any additional measurement. Moreover, the weave of the heavy-weight fabric is preferably determined.

The warp yarn titer, weft yarn titer, warp density and weft density of the heavy-weight fabric essentially determine the weight of the heavy-weight fabric. The weight of the fabric can be estimated by calculating (weight of the fabric [g/m²] = (warp yarn titer [g/m] * warp density [m⁻¹] * 1.04) + (weft yarn titer [g/m] * weft density [m⁻¹]* 1.07)). Alternatively, the weight of the heavy-weight fabric can be measured.

These parameters - warp yarn titer, weft yarn titer, warp density and weft density - are then entered in a weave design program. Any weave design program may be used, for example the program Design Scope, supplied by EAT Elektronische Ateliertechnik Textil GmbH, D-47906 Kempen.

A weave design program allows the simulation of a woven fabric. The main parameters used for the simulation include the warp yarn titer, the weft yarn titer, the warp density, the weft density, and the weave.

Different weave designs are then modelled in the weave design program by systematically decreasing at least one parameter selected from warp yarn titer, weft yarn titer, warp density and weft density. The yarn colour and texture are kept constant.

With respect to the decrease of the warp density and the weft density, this is generally done in integers (cm⁻¹). For example, if the warp and/or weft density of the heavy-weight fabric are 24 cm⁻¹, this value is decreased to 23 cm⁻¹, then 22 cm⁻¹, then 21 cm⁻¹ etc. The density is generally not decreased by more than 33 %. That is, if the warp and/or weft density of the heavy-weight fabric are 24 cm⁻¹, the lowest density used for the calculation would be 16 cm⁻¹. As to the warp yarn and weft yarn titers, these are generally decreased according to the titers which are commercially available. Commercially available titers of polyester fibers include for example 540 dtex, 420 dtex, 330 dtex, 270 dtex, 2/167 dtex, and 167 dtex. This results in a limited number of combinations of warp yarn titer, weft yarn titer, warp density and weft density for which the weave design is to be modelled.

The starting point of the modelling of the weave using the above parameters is the weave of the heavy-weight fabric. That is, the modelling is carried out using the same weave as the one of the heavy-weight fabric. Only in case the modelling using this weave does not result in a fabric having the same decorative pattern, the weave is varied in steps. For example, in the case that the weave of the heavy-weight fabric is a twill 4/4, it is changed to a twill 4/3 in the first step, then 3/3, then 3/2, then to a twill 2/2.

In the fourth step of the method of the present invention, the weave designs obtained by the modelling are compared with the pattern of the heavy-weight fabric. A comparison is preferably carried out on the computer display using the simulation of the heavy-weight fabric and each of the other simulated weave designs. A comparison can be made by merely looking at the weave designs at a distance of 30 cm. However, the use of digital image processing is preferred. For example, a comparison can be performed by subtracting the digital images.

The purpose of a comparison is to select a weave design that shows the same decorative pattern as that of the heavy-weight fabric and which has a weight being at least 20% lower than that of the heavy-weight fabric.

According to the present invention, the expression "the same decorative pattern" means decorative patterns which are preferably not discernible at a distance of 30 cm from the eye of the observer. In other words, there is preferably only a small deviation in the pattern repeat length in both the warp and the weft direction between heavy-weight fabric and light-weight fabric. The following table provides an overview of preferred pattern repeat length variations in the light-weight fabric for different pattern repeat lengths.

| Pattern Repeat length (cm) in the heavy-weight fabric | Preferred pattern repeat length variation in the light-weight fabric |
|---|---|
| <1.0 | 20 % |
| 1.0-<5.0 | 4 % |
| 5.0-10.0 | 2 % |
| >10.0 | 1 % |

According to the present invention, the decorative pattern has a preferred pattern repeat length in the range of 0.1 to 10 cm. Moreover, a pattern repeat length variation being 50 % or less of the one indicated in the above table is particularly preferable.

Moreover, the weave design to be selected corresponds to a woven fabric having a weight which is at least 20 %, more preferably at least 30 %, even more preferably at least 40 % lower than that of the heavy-weight fabric. Determining whether this criterion is fulfilled may be achieved by calculating the theoretical weight of the corresponding fabric using the formula: weight of the fabric [g/m²] = (warp yarn titer [g/m] * warp density [m⁻¹] * 1.04) + (weft yarn titer [g/m] * weft density [m⁻¹] * 1.07).

In the event that more than one weave design is found to fulfil these criteria, the one with the lower weight is selected.

Naturally, the number of weave designs to be compared with the pattern of the heavy-weight fabric in the third step should be limited. This number is preferably lower than 100, more preferably lower than 50. This is achieved by the following routine: In the modelling according to the third step of the method of the present invention, in a first approach, only the titer of the warp yarn and the weft yarn are varied. The other parameters - warp and weft yarn density, weave - remain unchanged. In the case that none of the weave designs obtained in this simulation or modelling has the required decorative pattern and reduced weight, the modelling or simulation of the third step is continued by further modifying warp and weft densities. Only in the event that this simulation does not result in a suitable simulation for the light-weight fabric either, the weave design is varied in the simulation. This iterative routine of the third and the fourth step of the present invention increases the efficiency of the method in terms of calculation time and capacity.

The weave design selected in the fourth step is then woven on a loom in a manner known in the art, thereby obtaining a light-weight flat woven fabric having the same decorative pattern as the heavy-weight fabric selected in the first step of the method of the present invention. Preferably, the same loom is used as for the production of the heavy-weight fabric. Preferably, the weaving conditions are also essentially identical.

For technical reasons, the weave design model and the pattern of the woven light-weight fabric may slightly differ. However, this difference is generally so small that the decorative pattern of the heavy-weight fabric and the decorative pattern of light-weight fabric are not discernible at a distance of 30 cm from the eye of the observer. The flat woven light-weight fabric has a weight of less than 260 g/m², preferably a weight in the range of 100 to 200 g/m².

The present invention also provides the use of the light-weight fabric obtainable by the above-described method for the production of a flat woven fabric having areas which are subject to different wear during use, particularly in combination with a flat woven heavy-weight fabric having a weight of 260 to 340 g/m², said heavy-weight fabric showing the same decorative pattern as the light-weight fabric showing. The flat woven fabric having areas which are subject to different wear during use includes clothing (for example, the back side of pants are subject to higher wear than the front side), bags (for example, the bottom part of a bag is subject to higher wear than the top part), and seat covers, particularly seat covers for vehicle seats such as automotive seats.

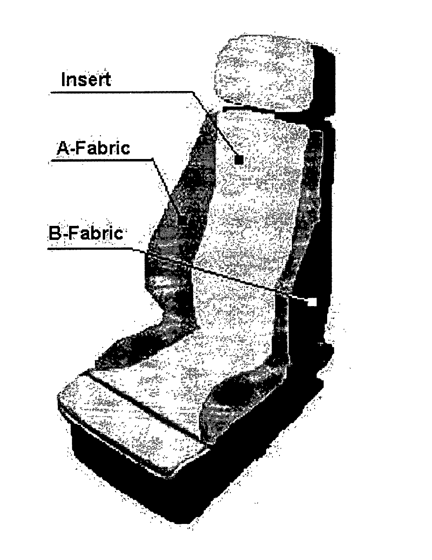

Figure 1 illustrates an automotive seat comprising a surface which is subject to high wear (A-surface) and a surface which is subject to less wear (B-surface). Whereas a heavy-weight fabric is used for the A-surface, a light-weight fabric is used for the B-surface. According to the present invention, the A-surface and the B-surface have the same decorative pattern. The insert shown in the figure has generally a different decorative pattern. According to the present invention, the B-surface is not limited to the seat side facings shown in Figure 1, but may also include other textiles used for automotive interior applications such as head rests, door panels, arm rests, and the back of the seat.

Furthermore, the present invention provides a method of producing a textile product, comprising the step of connecting a flat woven light-weight fabric obtainable by the above-described method and a flat woven heavy-weight fabric having a weight of 260 to 340 g/m2, said heavy-weight fabric and said light-weight fabric showing the same decorative pattern. The textile product may be clothing, a bag, or a seat cover. In the case of seat covers, the connection is preferably carried out such that the light-weight fabric covers the side facings and the back of the seat and the heavy-weight fabric covers at least a part of the seating surface. The connection may be provided, for example, by sewing or by adhesion. The seat cover is preferably one for an automotive seat.

### Example

A heavy-weight flat woven fabric made of polyester fibers was selected (twill 4/3; warp and weft yarn density: 24 yarns/cm⁻¹; warp and weft yarn titer: 540 dtex; weight: 300 g/m²). Using these parameters, weave designs were simulated using different titers and different twills in the program Design Scope:

| N | Construction | Density Yarns/cm | | Yarn Warp | Yarn Weft | Weight/g/m2 | Pattern Repeat/Length (mm) |
|---|---|---|---|---|---|---|---|
| 1 | Twill 2/2 | 24 | 24 | 420 | 167 | 160 | |
| 2 | Twill 3/2 | 24 | 24 | 420 | 167 | 160 | |
| 3 | Twill 3/3 | 24 | 24 | 420 | 167 | 160 | |
| 4 | Twill 4/3 | 24 | 24 | 420 | 167 | 160 | 2.8 |
| 5 | Twill 2/2 | 24 | 24 | 420 | 2/167 | 220 | |
| 6 | Twill 3/2 | 24 | 24 | 420 | 2/167 | 220 | |
| 7 | Twill 3/3 | 24 | 24 | 420 | 2/167 | 220 | |
| 8 | Twill 4/3 | 24 | 24 | 420 | 2/167 | 220 | |
| 9 | Twill 2/2 | 24 | 24 | 540 | 540 | 300 | |
| 10 | Twill 3/2 | 24 | 24 | 540 | 540 | 300 | |
| 11 | Twill 3/3 | 24 | 24 | 540 | 540 | 300 | |
| 12 | Twill 4/3 | 24 | 24 | 540 | 540 | 300 | 2.9 |

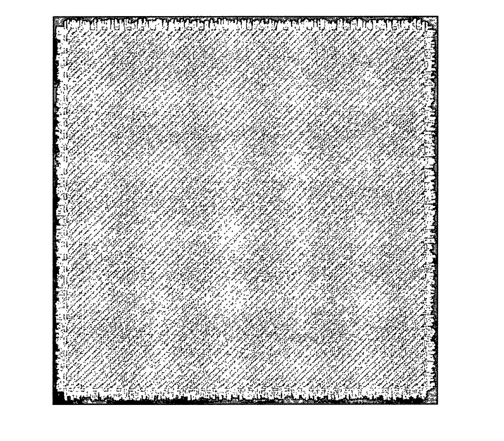

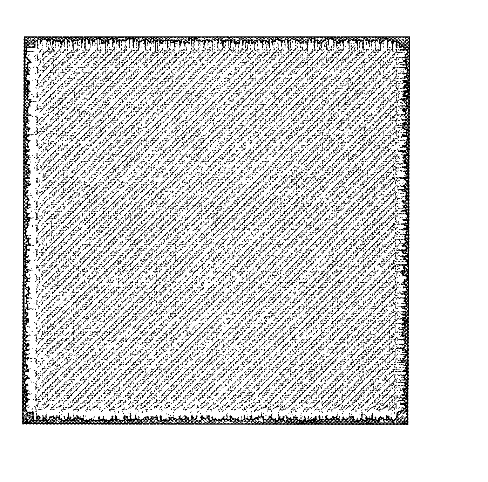

The simulation showed that No. 12 (corresponding to the heavy-weight fabric) and No. 4 were not discernible at a distance of 30 cm between the computer display and the eye of the observer, despite the fact that the weight was reduced by almost 50 %. Corresponding printouts of the weave design program Design Scope are shown in Figure 2 (No. 12) and Figure 3 (No. 4). No. 4 showed a pattern repeat length of 2.8 mm, whereas No. 12 showed a pattern repeat length of 2.9 mm. The accuracy of the simulation was checked by producing flat woven fabric Nos. 1 to 12. Fabrics No. 4 and No. 12 could not be discerned.

## Claims

1. Method of constructing a flat woven light-weight fabric, comprising the following steps:
i) selecting a flat woven heavy-weight fabric having a weight of 260 to 340 g/m², said heavy-weight fabric showing a decorative pattern;
ii) determining the warp yarn titer, the weft yarn titer, the warp density and the weft density of said heavy-weight fabric and entering these parameters in a weave design program;
iii) modelling different weave designs by systematically decreasing at least one parameter selected from the the warp yarn titer, the weft yarn titer, the warp density and the weft density of said heavy-weight fabric in the weave design program;
iv) comparing each of the weave designs obtained in step iii) with the decorative pattern of the heavy-weight fabric and selecting that weave design which shows the same decorative pattern as that of the heavy-weight fabric and which has a weight being at least 20% lower than that of the heavy-weight fabric; and
v) weaving a fabric according to the weave design selected in step iv) thereby obtaining a light-weight fabric having the same decorative pattern as the heavy-weight fabric.

2. Method of claim 1, wherein both the weave of the heavy-weight fabric and the weave of the light-weight fabric are twill weaves.

3. Method of any of the preceding claims, wherein differently coloured yarns are used as warp yarn and weft yarn, the warp yarn and the weft yarn used in the light-weight fabric being of the same colour as the warp yarn and the weft yarn used in the heavy-weight fabric, respectively.

4. Method of any of the preceding claims, wherein yarns having different textures are used as warp yarn and weft yarn, the warp yarn and the weft yarn used in the light-weight fabric being of the same texture as the warp yarn and the weft yarn used in the heavy-weight fabric, respectively.

5. Method of any of the preceding claims, wherein the decorative pattern has a pattern repeat length in the range of 0.1 to 10 cm.

6. Flat woven light-weight fabric, obtainable by the method of any of claims 1 to 5.

7. Use of a flat woven light-weight fabric obtainable by the method of any of claims 1 to 5 in combination with a flat woven heavy-weight fabric having a weight of 260 to 340 g/m2, said heavy-weight fabric and said light-weight fabric showing the same decorative pattern, for the production of a flat woven fabric having areas which are subject to different wear during use.

8. Use of claim 7, wherein the flat woven fabric having areas which are subject to different wear during use is a seat cover.

9. Method of producing a textile product, comprising the step of connecting a flat woven light-weight fabric obtainable by the method of any of claims 1 to 5 and a flat woven heavy-weight fabric having a weight of 260 to 340 g/m², said heavy-weight fabric and said light-weight fabric showing the same decorative pattern.

10. Method of claim 9, wherein the textile product is a seat cover for vehicle seats, and wherein the connecting is carried out such that the light-weight fabric covers the side facings and the back of the seat and the heavy-weight fabric covers at least a part of the seating surface.

11. Textile product obtainable by the method of any of claims 9 and 10.

12. Textile product of claim 11, the textile product being a seat cover for vehicles.

13. Automotive seat comprising a seat cover according to claim 12.
